(19) Europäisches Patentamt
European Patent Office
Office européen des brevets

(11) EP 0 627 052 B1

(12) # EUROPÄISCHE PATENTSCHRIFT

(45) Veröffentlichungstag und Bekanntmachung des Hinweises auf die Patenterteilung:
**02.10.1996 Patentblatt 1996/40**

(21) Anmeldenummer: **93903969.9**

(22) Anmeldetag: **13.02.1993**

(51) Int Cl.[6]: **F16F 9/46**, B60G 17/08

(86) Internationale Anmeldenummer:
**PCT/EP93/00353**

(87) Internationale Veröffentlichungsnummer:
**WO 93/17254 (02.09.1993 Gazette 1993/21)**

(54) **DÄMPFERVENTIL SOWIE VERFAHREN ZUR KONTINUIERLICHEN VERSTELLUNG DER DÄMPFUNGSKRAFT EINES REGELBAREN SCHWINGUNGSDÄMPFERS**

DAMPER VALVE AND PROCESS FOR CONTINUOUSLY ADJUSTING THE DAMPING FORCE OF AN ADJUSTABLE OSCILLATION DAMPER

SOUPAPE D'AMORTISSEUR ET PROCEDE DE REGLAGE CONTINU DE LA FORCE D'AMORTISSEMENT D'UN AMORTISSEUR DE VIBRATIONS REGLABLE

(84) Benannte Vertragsstaaten:
**DE FR GB**

(30) Priorität: **29.02.1992 DE 4206380**

(43) Veröffentlichungstag der Anmeldung:
**07.12.1994 Patentblatt 1994/49**

(73) Patentinhaber: **ITT Automotive Europe GmbH**
**60488 Frankfurt (DE)**

(72) Erfinder: **FEIGEL, Hans-Jörg**
**D-6365 Rosbach 2 (DE)**

(56) Entgegenhaltungen:
**EP-A- 0 288 736**
**EP-A- 0 399 326**
**EP-A- 0 433 701**
**WO-A-91/12452**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Dämpferventil für regelbare Schwingungsdämpfer mit einem durch einen elektromechanischen Wandler direkt betätigbaren druckunausgeglichenen Ventilkörper, der mit einer Meßeinrichtung unmittelbar gekoppelt ist, die den Betätigungsweg des Ventilkörpers erfaßt und deren Ausgangssignal einer elektrischen Schaltung zugeführt wird, sowie ein Verfahren zur kontinuierlichen Verstellung der Dämpfungskraft eines bei einem Fahrwerksregelungssystem für Kraftfahrzeuge verwendeten regelbaren Schwingungsdämpfers, dessen Dämpferventil über eine elektrische Leistungsstufe ansteuerbar ist, das einen Ventilkörper sowie eine den Betätigungsweg des Ventilkörpers erfassende Meßeinrichtung aufweist, wobei das Fahrwerksregelungssystem Sensoren zur Ermittlung des fahrdynamischen Zustandes sowie einen elektronischen Fahrwerksregler aufweist, dessen Ausgangssignale der Ansteuerung des Dämpferventils dienen.

Ein derartiges Dämpferventil ist z.B. aus der europäischen Patentanmeldung EP 0 399 326 A2 bekannt. Bei dem vorbekannten Dämpferventil sind zwei Drosseldurchlässe vorgesehen, wobei der erste Durchlaß zur Einstellung der Dämpfung elektrisch über einen Elektromagnet veränderbar ist, während der andere Durchlaß bei einem Stromausfall freigegeben wird. Damit ergibt sich eine beliebig vorwählbare, vorzugsweise etwa mittlere Dämpfung.

Als nachteilig ist bei dem vorbekannten Dämpferventil die Tatsache anzusehen, daß insbesondere im Bereich großer, durch das Dämpferventil hindurchfließender Volumenströme keine Druckbegrenzungsfunktion wirksam wird. Bei dem bekannten Dämpferventil treten somit hohe Druckspitzen bei schnellen Volumenstromänderungen auf, so daß ein mit einem derartigen Dämpferventil ausgerüsteter regelbarer Schwingungsdämpfer für den Einsatz in einem semiaktiven Fahrwerksregelungssystem weniger geeignet ist.

Es ist daher Aufgabe der vorliegenden Erfindung ein Dämpferventil der eingangs genannten Art vorzuschlagen, bei dem bei schnellen Volumenstromänderungen das Dämpferventil selbsttätig öffnet und somit keine Druckspitzen auftreten. Gleichzeitig soll das dynamische Verhalten im Fahrwerksregelungsprozeß verbessert werden. Außerdem soll erreicht werden, daß die Charakteristik des Kennlinienfeldes des vorgeschlagenen Dämpferventils elektrisch beeinflußbar wird, um das gleiche Dämpferventil an verschiedene Fahrzeugtypen anzupassen. Das Kennlinienfeld soll während der Fahrt geändert werden können.

Diese Aufgabe wird erfindungsgemäß dadurch gelöst, daß die elektrische Schaltung den elektromechanischen Wandler in der Art ansteuert, daß in einem ersten Volumenstrombereich eine Drosselfunktion und einem zweiten Volumenstrombereich eine Druckbegrenzungsfunktion erfüllt werden.

Verfahrensmäßig besteht die Lösung der erwähnten Aufgabe darin, daß die Ausgangssignale des Fahrwerksreglers einerseits zusammen mit Ausgangssignalen der den Betätigungsweg des Ventilkörpers erfassenden Meßeinrichtung einer Vergleichsschaltung und andererseits einem ersten Verstärker zugeführt werden, wobei in der Vergleichsschaltung ein Differenzwert gebildet wird, der einem zweiten Verstärker zugeführt wird, und daß die Ausgangssignale der beiden Verstärker einem variablen Begrenzer zugeführt werden, der die Ausgangssignale des zweiten Verstärkers in Abhängigkeit von den Ausgangssignalen des ersten Verstärkers begrenzt und der elektrischen Leistungsstufe des Dämpferventils zuführt.

Eine weitere Verbesserung des dynamischen Verhaltens des erfindungsgemäßen Dämpferventils wird bei einer vorteilhaften Weiterbildung dadurch erreicht, daß der elektro-mechanische Wandler als eine mit einem Permanentmagneten zusammenwirkende Tauchspule ausgebildet ist, deren Träger den Ventilkörper bildet.

Günstige Voraussetzungen für eine Kompensation von innerhalb des Dämpferventils auftretenden Strömungskräften sowie eine Ankopplung des elektromechanischen Wandlers werden in einer weiteren Ausgestaltung des Erfindungsgegenstandes dadurch geschaffen, daß der Ventilkörper als eine auf einem zylindrischen Führungsteil verscbiebbar geführte Hülse ausgebildet ist, die mit im Führungsteil vorgesehenen Strömungsquerschnitten zusammenwirkt.

Für die einwandfreie Funktion des erfindungsgemäßen Dämpferventils bzw. eines mit ihm ausgerüsteten Schwingungsdämpfers ist dabei besonders vorteilhaft, wenn beim Zusammenwirken des Ventilkörpers mit den Strömungsquerschnitten eine Kompensation von den im Wirkungsbereich auftretenden hydraulischen Kräften erfolgt. Diese Maßnahme ermöglicht außerdem eine Senkung des für den elektromechanischen Wandler erforderlichen Energiebedarfs. Die Kompensation der Strömungskräfte wird dadurch erreicht, daß der Ventilkörper und/oder der in Strömungsrichtung sich hinter den Strömungsquerschnitten befindliche Raum so ausgebildet sind, daß eine Umlenkung des Volumenstroms gewährleistet ist.

Die mit den Strömungsquerschnitten zusammenwirkende Steuerkante des Ventilkörpers ist dabei vorzugsweise kegelstumpfförmig ausgebildet.

Eine andere Möglichkeit, den Strömungskräften entgegenzuwirken, besteht nach einem weiteren Erfindungsmerkmal darin, daß die Strömungsquerschnitte in einem hydraulischen Ringraum münden, der mit Ausgang skanälen des Dämpferventils derart verbunden ist, daß der im Ringraum entstehende statische Druck eine hydraulische Kraftkomponente wirksam werden läßt, die den auf den Ventilkörper wirkenden Bernoulli-Kräften entgegenwirkt.

Vorteilhaft ist auch, wenn im Führungsteil radiale Druckentlastungsnuten vorgesehen sind, die in einem zwischen dem Ventilkörper und dem Führungsteil ausgebildeten Spalt münden. Durch diese Maßnahme wird der Effekt des hydraulischen Klemmens in diesem Bereich verhindert.

Das Führungsteil weist dabei vorzugsweise Druckmittelkanäle auf, die mit dem Spalt verbunden sind und denen ein Filterelement vorgeschaltet ist. Dadurch wird eine einwandfreie Versorgung des Spaltes mit gefiltertem Öl gewährleistet, so daß eine Verschmutzungsgefahr weitgehend eliminiert wird.

Die Verschmutzungsgefahr des erfindungsgemäßen Dämpferventils wird bei einer weiteren Ausführung der Erfindung dadurch reduziert, daß im Bereich der Strömungsquerschnitte eine Ringnut vorgesehen ist. Zwischen den Strömungsquerschnitten und der Ringnut liegt lediglich ein kurzer Dichtspalt mit geringer Druckdifferenz, so daß in den Spalt kaum Schmutz hineingedrückt werden kann.

Um auf eine einfache, kostengünstige Art zu gewährleisten, daß am Ventilkörper im Betrieb kein Druckausgleich stattfindet, sieht eine vorteilhafte Weiterbildung des Erfindungsgegenstandes vor, daß im Führungsteil eine Bohrung vorgesehen ist, in der ein am Ventilkörper axial lose anliegendes, zylindrisches Teil geführt ist, dessen Stirnfläche mit dem im Schwingungsdämpfer herrschenden hydraulischen Druck beaufschlagbar ist.

Um zu gewährleisten, daß die Funktion des mit der erfindungsgemäßen Dämpfungsventil ausgestatteten Schwingungsdämpfers auch bei einem Ausfall des elektromechanischen Wandlers weiterhin aufrechterhalten wird, (sog. Fail-Safe-Funktion), sieht eine weitere Ausgestaltung des Erfindungsgegenstandes vor, daß der Ventilkörper auf einer Biegefeder aufgehängt ist, die im Dämpferventilgehäuse eingespannt ist. Diese Maßnahme ist insbesondere in Verbindung mit bidirektionalen Wandlern sinnvoll. Die Biegefeder kann bespielsweise als eine mit Durchlässen versehene Federscheibe ausgebildet sein. Weiterhin ist es möglich, die Biegefeder als Lagerung des Ventilkörpers bzw. des elektromechanischen Wandlers auszubilden, um auf diese Weise die Reibeffekte weiter zu minimieren.

Eine kostengünstig herstellbare, bauraumsparende Ausführung der Erfindung zeichnet sich dadurch aus, daß die Meßeinrichtung Änderungen von magnetischen Größen erfaßt, die durch die Verstellung des Ventilkörpers hervorgerufen werden.

Dabei kann die Meßeinrichtung vorzugsweise durch einen am Ventilkörper bzw. einem mit ihm verbundenen Teil angebrachten Permanentmagneten sowie ein die Änderungen seines Magnetfeldes registrierendes Sensorelement gebildet sein.

Eine andere vorteilhafte Weiterbildung des Erfindungsgegenstandes, die insbesonders für den Einsatz bei höheren Temperaturen geeignet ist, sieht vor, daß das Sensorelement durch ein magnetoresistives Element gebildet ist. Das Sensorelement kann allerdings auch durch ein Hallelement gebildet sein.

Eine unabhängig vom Einfluß äußerer Magnetfelder zuverlässig arbeitende Meßeinrichtung wird beispielsweise durch eine Reflexlichtschranke gebildet.

Eine robuste, gegen Verschmutzung unempfindliche Meßeinrichtung kann als eine nach dem Wirbelstromprinzip arbeitende Anordnung ausgebildet sein.

Bei der Durchführung des erfindungsgemäßen Verfahrens zur kontinuerlichen Verstellung der Dämpfungskraft eines mit dem Dämpferventil nach der Erfindung ausgestatteten Schwingungsdämpfers ist es besonders vorteilhaft, daß für Fahrwerksregelungswecke der im Schwingungsdämpfer eingestellte Druck (p) im statischen Zustand über die folgende Gleichung

$$p = \frac{K_{mag} \cdot i - C \cdot y}{A_1} = K_1 \cdot i + K_2 \cdot y,$$

aus den Sensor- und Steuersignalen ermittelt werden kann, da die Strömungskräfte kompensiert sind, wobei

| | | |
|---|---|---|
| $K_{mag}$ | [N/A] | den Übertragungsfaktor des elektromechanischen Wandlers, |
| i | [A] | den der Tauchspule zugeführten Strom, |
| C | [N/mm] | die Federkonstante der Biegefeder, |
| y | [mm] | den Betätigungsweg des Ventilkörpers, und |
| $A_1$ | [$mm^2$] | die Fläche des am Ventilkörper anliegenden zylindrischen Teiles |

bedeuten.

Weitere Einzelheiten, Merkmale und Vorteile eines Ausführungsbeispiels der Erfindung gehen aus der nachfolgenden Beschreibung unter Bezugnahme auf die beiliegende Zeichnung hervor.

Es zeigen:

Fig. 1 einen mit dem erfindungsgemäßen Dämpferventil ausgestatteten regelbaren Schwingungsdämpfer in schematischer Schnittdarstellung;

Fig. 2 das erfindungsgemäße Dämpferventil in größerem Maßstab;

Fig. 3 ein mit dem erfindungsgemäßen Dämpferventil realisierbares Kennfeld; und

Fig. 4 einen Signalflußplan eines Regelkreises zur Durchführung des Regelverfahrens nach der Erfindung.

Der in Fig. 1 schematisch dargestellte regelbare Schwingungsdämpfer weist einen Arbeitszylinder 1 sowie ein zum Arbeitszylinder 1 koaxial angeordnetes Rohr 6 auf, so daß dazwischen ein Verbindungskanal 33 gebildet wird. Koaxial zum Arbeitszylinder 1 bzw. dem Rohr 6 ist weiter ein Außenrohr 7 angeordnet, das mit dem Rohr 6 einen teilweise mit Öl gefüllten, mit dem Verbindungskanal 33 zusammenwirkenden Ausgleichsraum 8 mit einem Kreisringquerschnitt begrenzt. Der Innenraum des Arbeitszylinders 1 ist mittels eines durch eine Kolbenstange 2 verschiebbaren Kolbens 3 in eine oberhalb des Kolbens 3 ausgebildete erste Arbeitskammer 4 sowie eine unterhalb des Kolbens 3 ausgebildete zweite Arbeitskammer 5 unterteilt.

Im Bodenbereich des gezeigten Schwingungsdämpfers befindet sich eine näher nicht bezeichnete Ventilbaugruppe, die im wesentlichen aus einem in der Zugstufe wirksamen Rückschlagventil 9, einem in der Druckstufe wirksamen, vorzugsweise durch ein zweites Rückschlagventil gebildeten Schaltventil 13 sowie einem in seiner Gesamtheit mit dem Bezugszeichen 10 versehenen steuerbaren Dämpferventil besteht. Die beiden Rückschlagventile 9,13 sind dabei vorzugsweise in einem Ventilgehäuse 34 angeordnet, das gleichzeitig das Dämpferventil 10 aufnimmt.

Das erste Rückschlagventil 9 besteht aus einer durch eine Feder 38 vorgespannten Ventilscheibe 70, die mit im Ventilgehäuse 34 vorgesehenen Durchlässen 37 zusammenwirkt und in der Zugstufe ein Nachsaugen des Öls aus dem Ausgleichsraum 8 in die zweite Arbeitskammer 5 ermöglicht. Das mit dem in der zweiten Arbeitskammer 5 herrschenden Druck beaufschlagbare Schaltventil bzw. zweite Rückschlagventil 13 wird durch eine mittels einer Feder 48 vorgespannte, radial außerhalb des Arbeitszylinders 1 angeordnete Ventilscheibe 50 gebildet, die mit im Ventilgehäuse 34 ausgebildeten, axial verlaufenden Durchlässen 47 zusammenwirkt. Der Arbeitszylinder 1 ist in seinem unteren Bereich (in der unteren Hubendlage des Kolbens 3) mit Öffnungen 49 versehen, die ganz oder teilweise vom Kolben 3 überfahren werden können. Diese Öffnungen 49 münden in einem Ringraum 51, der radial (und axial von unten) durch das Ventilgehäuse 34 und axial vom zweiten Rückschlagventil 13 begrenzt ist.

Das als ein einstufiges Schieberventil ausgeführte Dämpferventil 10 ist in einem einen Teil des Ventilgehäuses 34 bildenden Dämpferventilgehäuse 35 vorzugsweise senkrecht zur Schwingungsdämpfer-Längsachse angeordnet und dient zur Änderung des Durchflußquerschnittes der Verbindung zwischen dem Verbindungskanal 33 und dem Ausgleichsraum 8. Wie insbesondere der Fig. 2 zu entnehmen ist, besteht das Dämpferventil 10 aus einem im wesentlichen zylindrischen, Strömungsquerschnitte 12 aufweisenden Führungsteil 11, auf dem ein vorzugsweise topf- oder hülsenförmiger Ventilkörper 14 geführt wird, der den Träger einer elektrischen Tauchspule 15 bildet, die zusammen mit einem ringförmigen Polschuh 16, einem Permanentmagneten 17 sowie einer am Permanentmagneten 17 anliegenden Bodenplatte 18, einen elektromechanischen Wandler 20 bilden. Die Strömungsquerschnitte 12 münden einerseits in einer im Führungsteil 11 ausgebildeten zylindrischen Ausnehmung 21, die im montierten Zustand des Dämpferventils 10 mit dem Verbindungskanal 33 (s. Fig. 1) in Verbindung steht, und andererseits in einem Ringraum 22, der über Ausgangskanäle 23 mit dem Ausgleichsraum 8 verbunden ist. Die Ausgangskanäle 23 werden dabei von einem Deckel 24 begrenzt, der in seiner Mitte eine näher nicht bezeichnete kreisförmige Öffnung aufweist, durch die sich sowohl des Führungsteil 11 als auch der Ventilkörper 14 hindurch erstrecken. Der Ventilkörper 14 ist dabei vorzugsweise auf einer scheibenförmigen Biegefeder 25 aufgehängt, die an ihrem Außenrand zwischen dem Deckel 24 und dem Polschuh 16 eingespannt ist. Das Führungsteil 11 und der Ventilkörper 14 sind so ausgelegt, daß zwischen ihnen ein radialer Spalt 26 ausgebildet ist. In diesem Spalt 26 münden mehrere auf der Oberfläche des Führungsteiles 11 nebeneinander angeordnete Druckentlastungsnuten 27 sowie in der Ausnehmung 21 mündende Druckmittelkanäle 28, denen ein Filterelement 29 vorgeschaltet ist. Am Boden der Ausnehmung 21 befindet sich eine axiale Bohrung 31, die ein am Ventilkörper 14 axial lose anliegendes zylindrisches Teil 32 aufnimmt, dessen Stirnfläche mit dem im Schwingungsdämpfer herrschenden hydraulischen Druck beaufschlagbar ist.

Um die im Betrieb des erfindungsgemäßen Dämpferventils 10 im Bereich der Strömungsquerschnitte 12 auftretenden Strömungskräfte wirksam zu kompensieren ist es vorteilhaft, wenn die mit den Strömungsquerschnitten 12 zusammenwirkende Steuerkante 36 kegelstumpfförmig gestaltet ist. Außerdem ist es sinnvoll, im Ausgangsbereich des Dämpferventils 10 eine Ringnut 39 vorzusehen, die als Sammelstelle für die in die Strömungsquerschnitte 12 eindringenden Schmutzpartikel dient. Um einen Volumenausgleich innerhalb des Dämpferventils 10 zu ermöglichen, ist es erforderlich, in dem Deckel 24, dem Polschuh 16, dem Ventilkörper 14 sowie der Biegefeder 25 Bohrungen 41,42,43 bzw. Durchlässe 40 vorzusehen.

Um das in Fig. 3 in diagrammatischer Darstellung gezeigte Kennlinienfeld des in Fig. 1 dargestellten Schwingungsdämpfers, d.h. die Abhängigkeit des im Schwingungsdämpfer herrschenden hydraulischen Druckes von dem durch das Dämpferventil 10 fließenden Volumenstrom bei verschiedenen Werten des den elektromechanischen Wandler 20 ansteuernden Erregerstromes zu erreichen, ist es erforderlich, den Betätigungsweg des Ventilkörpers 14 zu sensieren. Zu diesem Zweck ist unmittelbar mit dem Ventilkörper 14 eine Meßeinrichtung 30 gekoppelt, die Änderungen von magnetischen Größen erfaßt, die durch die Verstellung des Ventilkörpers 14 hervorgerufen werden. Die in Fig. 2 gezeigte Meßeinrichtung 30 besteht aus einem am Ventilkörper 14 bzw. einem mit dem Ventilkörper 14 verbundenen Teil 44 befestigten Permanentmagneten 45 sowie einem mit ihm zusammenwirkenden Sensorelement 46, beispielsweise einem Hall- oder einem magnetoresistiven Element. Denkbar sind jedoch auch andere Ausführungsformen der Meßeinrichtung, die z.B. durch eine Reflexlichtschranke gebildet ist oder nach dem Wirbelstromprinzip arbeiten kann. Das Ausgangssignal der Meßeinrichtung 30 wird vorzugsweise einer elektrischen Schaltung 60 (Fig. 4) zugeführt, die eine Ansteuerung des elektromechanischen Wandlers 20 in der Art ermöglicht, daß im Dämpferventil 10 im Bereich kleiner Volumenströme (A - s. Fig. 3) eine Drosselfunktion und im Bereich größerer Volumenströme (B - s. Fig. 3) eine Druckbegrenzungsfunktion erfüllt wird. Die Funktionsweise der erwähnten Schaltung wird im nachfolgenden Text im Zusammenhang mit Fig. 4 näher erläutert, die die Struktur eines Regelkreises zur Durchführung des erfindungsgemäßen Verfahrens zur kontinuierlichen Verstellung der Dämpfungskraft eines mit dem Dämpferventil 10 nach Fig. 2 ausgestatteten regelbaren Schwingungsdämpfers zeigt.

Wie der Fig. 4 zu entnehmen ist, werden die den gewünschten Betätigungshub des Ventilkörpers 14 des erfindungsgemäßen Dämpferventils 10 darstellenden Ausgangssignale ($y_{soll}$) eines zum Fahrwerksregelungssystem gehörenden Fahrwerksreglers 57 einerseits zusammen mit dem Ausgangssignal ($y_{soll}$) der vorhin erwähnten Meßeinrichtung 30 einer Vergleichsschaltung 52 und andererseits einem ersten Verstärker 53 zugeführt. In der Vergleichsschaltung 52 wird ein Differenzwert gebildet, der als Eingangssignal einem zweiten Verstärker 54 zugeführt wird. Das Ausgangssignal des zweiten Verstärkers 54 wird als Eingangssignal einem variablen Begrenzer 55 zugeführt, in dem es im Bedarfsfall in Abhängigkeit vom Ausgangssignal des ersten Verstärkers 53 begrenzt wird. Das Ausgangssignal des variablen Begrenzers 55 wird schließlich einer elektrischen Leistungsstufe 56 zugeführt, die elektrischen Strom für die Ansteuerung des elektromechanischen Wandlers 20 liefert.

Der mit dem Bezugszeichen 58 versehene Teil des Signalflußplans nach Fig. 4 stellt das Ersatzschaltbild des in Fig. 2 gezeigten erfindungsgemäßen Dämpferventils 10 dar, in dem der Funktionsblock 61 ($K_{mag}$, Tm) das zeitliche Übertragungsverhalten des elektromechanischen Wandlers 20 zeigt, der hier als Proportionalglied mit Verzögerung erster Ordnung angenommen wird. Die mit 62 bezeichnete Signaladdition zeigt die Kräftebilanz der wichtigsten im Dämpferventil 10 auftretenden Kraftkomponenten, während der Funktionsblock 63 die wirksame Fläche $A_1$ des am Ventilkörper 14 anliegenden zylindrischen Teiles 32 darstellt, das einer Druckrückführung dient. Mit dem Bezugszeichen 64 ist ein erster Integrator versehen, dessen Ausgangssignal der Beschleunigung $\dot{y}$ des Ventilkörpers 14 entspricht, wobei mit m das Gewicht sämtlicher bewegter Dämpferventilteile bezeichnet wird. Der Funktionsblock 65 (D) stellt eine geschwindigkeitsproportionale Reibkraft dar, während der Funktionsblock 66 das Verhalten der Biegefeder 25 (Fig.2) mit einer Federkonstanten C zeigt. Im zweiten Integrator 67 entsteht ein dem Betätigungsweg y des Ventilkörpers 14 entsprechendes Signal, während der Funktionsblock 68 das Verhalten der Meßeinrichtung 30 (Fig. 2) zeigt. Mit dem Funktionsblock 69 wird im Signalflußplan auf eine extrem vereinfachte Art der Drosselwirkung des Dämpferventils 10 Rechnung getragen, wobei mit Q der durch das Dämpferventil 10 fließende Volumenstrom und mit p der eingestellte Schwingungsdämpferdruck bezeichnet werden.

Der zweite, mit dem Bezugszeichen 59 versehene Teil des Signalflußplans von Fig. 4 stellt vereinfacht das Verhalten des Schwingungsdämpfers von Fig. 1 dar, wobei mit $A_2$ die wirksame Fläche des Kolbens 3 (Fig. 1) bezeichnet wird, die in der Zugstufe durch die Kolben-Ringfläche (Kolbengesamtfläche - Fläche des Kolbenstangenquerschnitts) und in der Druckstufe durch die Fläche des Kolbenstangenquerschnitts gebildet wird. Mit x werden schließlich die Eingangsgröße bzw. die Kolbenstangengeschwindigkeit und mit F die entstehende Dämpfungskraft bezeichnet.

Für die nachfolgende Beschreibung der Funktion des in Fig. 4 gezeigten Regelkreises wird zunächst angenommen, daß in einem Regelprozeß eine mittlere Kennlinie aus dem in Fig. 3 dargestellten gesamten Kennlinienfeld eingestellt werden soll. Durch den Fahrwerksregler 57 wird ein bestimmter Betätigungsweg ($y_{soll}$) des Ventilkörpers 14 vorgegeben. Für den Fall, daß kein Volumenstrom durch das Dämpferventil 10 fließt, bewirken die im Regelkreis entstehenden Steuersignale eine Verstellung des Ventilkörpers 14 in die gewünschte Position. Mit zunehmenden kleinen Volumenströmen (Bereich A in Fig. 3) steigt der Druck im Schwingungsdämpfer gemäß dem ersten Abschnitt I der gewünschten Kennlinie, so daß das Dämpferventil eine Drosselfunktion erfüllt. Dabei wirkt auf die Stirnfläche des am Ventilkörper 14 anliegenden Teiles 32 der im Schwingungsdämpfer herrschende Druck, so daß eine Kraftkomponente entsteht, die in der Öffnungsrichtung des Dämpferventils 10 wirkt. Diese Kraftkomponente verursacht über den Regelkreis eine Erhöhung der am Ventilkörper 14 vom elektromechanischen Wandler 20 aufgebrachten Betätigungskraft, so daß ein gleichbleibender Drosselquerschnitt gewährleistet wird.

Bei weiter ansteigendem Volumenstrom, der einem Dämpferdruck $P_1$ entspricht, müßte eine weitere Erhöhung der vom elektromechanischen Wandler 20 aufgebrachten Betätigungskraft erfolgen, um den Ventilkörper 14 in der eingestellten Position zu halten. Dies ist jedoch im Bereich größerer Volumenströme (Bereich B in Fig. 3) auf Grund der vom Ausgangssignal $y_{soll}$ des Fahrwerksreglers 57 abhängigen Funktion des variablen Begrenzers 55 nicht mehr möglich. Deshalb erfolgt eine weitere Verstellung des Ventilkörpers 14 in der Öffnungsrichtung, die eine Druckbegrenzung gemäß dem Abschnitt II der gewünschten Kennlinie zur Folge hat.

Eine Änderung der Kennfeldcharakteristik kann im dargestellten Beispiel durch Änderungen der Verstärkungsfaktoren der beiden Verstärker 53 und 54 erfolgen.

Bezugszeichenliste

1 Arbeitszylinder
2 Kolbenstange
3 Kolben
4 Arbeitskammer
5 Arbeitskammer
6 Rohr
7 Außenrohr
8 Ausgleichsraum
9 Rückschlagventil
10 Dämpferventil
11 Führungsteil
12 Strömungsquerschnitt
13 Schaltventil/Rückschlagventil
14 Ventilkörper
15 Tauchspule
16 Polschuh
17 Permanentmagnet
18 Bodenplatte
20 Wandler
21 Ausnehmung
22 Ringraum
23 Strömungskanal
24 Deckel
25 Biegefeder
26 Spalt
27 Druckentlastungsnut
28 Druckmittelkanal
29 Filterelement
30 Meßeinrichtung
31 Bohrung
32 Teil (Pin)
33 Verbindungskanal
34 Ventilgehäuse
35 Dämpferventilgehäuse
36 Steuerkante
37 Durchlaß
38 Feder
39 Ringnut
40 Durchlaß
41 Bohrung
42 Bohrung
43 Bohrung
44 Teil
45 Permanentmagnet
46 Sensorelement

47 Durchlaß
48 Feder
49 Öffnung
50 Ventilscheibe
51 Ringraum
52 Vergleichsschaltung
53 Verstärker
54 Verstärker
55 Begrenzer
56 Leistungsstufe
57 Fahrwerksregler
58 Teil des Signalflußplans
59 Teil des Signalflußplans
60 Schaltung
61 Funktionsblock
62 Signaladdition
63 Funktionsblock
64 Integrator
65 Funktionsblock
66 Funktionsblock
67 Integrator
68 Funktionsblock
69 Funktionsblock
70 Ventilscheibe

**Patentansprüche**

1. Dämpferventil (10) für regelbare Schwingungsdämpfer mit einem durch einen elektromechanischen Wandler (20) direkt betätigbaren druckunausgeglichenen Ventilkörper (14), der mit einer Meßeinrichtung (30) unmittelbar gekoppelt ist, die den Betätigungsweg des Ventilkörpers (14) erfaßt und deren Ausgangssignal einer elektrischen Schaltung zugeführt wird, dadurch **gekennzeichnet**, daß die elektrische Schaltung den elektromechanischen Wandler (20) in der Art ansteuert, daß in einem ersten Volumenstrombereich (A) eine Drosselfunktion und einem zweiten Volumenstrombereich (B) eine Druckbegrenzungsfunktion erfüllt werden.

2. Dämpferventil nach Anspruch 1, dadurch **gekennzeichnet,** daß der elektromechanische Wandler (20) als eine mit einem Permanentmagneten (17) zusammenwirkende Tauchspule (15) ausgebildet ist, deren Träger den Ventilkörper (14) bildet.

3. Dämpferventil nach Anspruch 1, dadurch **gekennzeichnet**, daß der Ventilkörper (14) als eine auf einem zylindrischen Führungsteil (11) verschiebbar geführte Hülse ausgebildet ist, die mit im Führungsteil (11) vorgesehenen Strömungsquerschnitten (12) zusammenwirkt.

4. Dämpferventil nach Anspruch 3, dadurch **gekennzeichnet**, daß der Ventilkörper (14) und/oder der in Strömungsrichtung hinter den Strömungsquerschnitten (12) befindliche Raum so ausgebildet sind, daß eine Umlenkung des Volumenstroms gewährleistet ist, so daß eine Kompensation von den im Wirkungsbereich auftretenden hydraulischen Kräften erfolgt.

5. Dämpferventil nach Anspruch 4, dadurch **gekennzeichnet**, daß die mit den Strömungsquerschnitten (12) zusammenwirkende Steuerkante (36) des Ventilkörpers (14) kegelstumpfförmig ausgebildet ist.

6. Dämpferventil nach Anspruch 4, dadurch **gekennzeichnet**, daß die Strömungsquerschnitte (12) in einem hydraulischen Ringraum (22) münden, der mit Ausgangskanälen (23) des Dämpferventils (10) derart verbunden ist, daß der im Ringraum (22) entstehende statische Druck eine hydraulische Kraftkomponente wirksam werden läßt, die den auf den Ventilkörper (14) wirkenden Bernoulli-Kräften entgegenwirkt.

7. Dämpferventil nach Anspruch 3 oder einem der Ansprüche 4 bis 6, dadurch **gekennzeichnet**, daß im Führungsteil (11) radiale Druckentlastungsnuten (27) vorgesehen sind, die in einem zwischen dem Ventilkörper (14) und dem Führungsteil (11) ausgebildeten Spalt (26) münden.

8. Dämpferventil nach Anspruch 7, dadurch **gekennzeichnet**, daß das Führungsteil (11) Druckmittelkanäle (28) aufweist, die mit dem Spalt (26) verbunden sind und denen ein Filterelement (29) vorgeschaltet ist.

9. Dämpferventil nach einem der vorhergehenden Ansprüche, dadurch **gekennzeichnet,** daß im Bereich der Strömungsquerschnitte (12) eine oder mehrere Ringnuten (39) vorgesehen sind.

10. Dämpferventil nach Anspruch 8, dadurch **gekennzeichnet,** daß das Führungsteil (11) eine Bohrung (31) aufweist, in der ein am Ventilkörper (14) axial lose anliegendes, zylindrisches Teil (32) geführt ist, dessen Stirnfläche mit dem im Schwingungsdämpfer (10) herrschenden hydraulischen Druck beaufschlagbar ist.

11. Dämpferventil nach Anspruch 2, dadurch **gekennzeichnet,** daß der Ventilkörper (14) auf einer Biegefeder (25) aufgehängt ist, die im Dämpferventilgehäuse (35) eingespannt ist.

12. Dämpferventil nach Anspruch 11, dadurch **gekennzeichnet**, daß die Biegefeder (25) als eine mit Durchlässen (40) versehene Federscheibe ausgebildet ist.

13. Dämpferventil nach Anspruch 1, dadurch **gekennzeichnet**, daß die Meßeinrichtung (30) Änderungen von magnetischen Größen erfaßt, die durch die Verstellung des Ventilkörpers (14) hervorgerufen werden.

14. Dämpferventil nach Anspruch 13, dadurch **gekennzeichnet,** daß die Meßeinrichtung (30) durch einen am Ventilkörper (14) bzw. einem mit ihm verbundenen Teil (44) angebrachten Permanentmagneten (45) sowie ein sein Magnetfeld registrierendes Sensorelement (46) gebildet ist.

15. Dämpferventil nach Anspruch 13, dadurch **gekennzeichnet**, daß die Meßeinrichtung durch ein Sensorelement gebildet ist, das am Ventilkörper befestigt ist und mit dem Permanentmagneten des elektromechanischen Wandlers zusammenwirkt.

16. Dämpferventil nach Anspruch 14 oder 15, dadurch **gekennzeichnet,** daß das Sensorelement (46) durch ein magnetoresistives Element gebildet ist.

17. Dämpferventil nach Anspruch 14 oder 15, dadurch **gekennzeichnet,** daß das Sensorelement (46) durch ein Hallelement gebildet ist.

18. Dämpferventil nach Anspruch 1, dadurch **gekennzeichnet,** daß die Meßeinrichtung durch eine Reflexlichtschranke gebildet ist.

19. Dämpferventil nach Anspruch 1, dadurch **gekennzeichnet,** daß die Meßeinrichtung als eine nach dem Wirbelstromprinzip arbeitende Anordnung ausgebildet ist.

20. Dämpferventil nach Anspruch 12, dadurch **gekennzeichnet**, daß die Stromzuführung der Tauchspule (15) über die Federscheibe (25) bzw. mehrere Federscheiben erfolgt.

21. Verfahren zur Verstellung der Dämpfungskraft eines bei einem Fahrwerksregelungssystem für Kraftfahrzeuge verwendeten regelbaren Schwingungsdämpfers, der ein über eine elektrische Leistungsstufe (56) ansteuerbares Dämpferventil (10), insbesondere nach einem der Ansprüche 1 bis 20, aufweist, das einen Ventilkörper (14) sowie eine den Betätigungsweg des Ventilkörpers (14) erfassende Meßeinrichtung (30) aufweist, wobei das Fahrwerksregelungssystem mit Sensoren zur Ermittlung des fahrdynamischen Zustandes sowie mit einem elektronischen Fahrwerksregler (57) ausgestattet ist, dessen Ausgangssignale der Ansteuerung des Dämpferventils (10) dienen, dadurch **gekennzeichnet,** daß die Ausgangssignale ($Y_{soll}$) des Fahrwerksreglers (57) einerseits zusammen mit Ausgangssignalen der Meßeinrichtung (30) einer Vergleichsschaltung (52) und andererseits einem ersten Verstärker (53) zugeführt werden, wobei in der Vergleichsschaltung (52) ein Differenzwert gebildet wird, der einem zweiten Verstärker (54) zugeführt wird, und daß die Ausgangssignale der beiden Verstärker (53,54) einem variablen Begrenzer (55) zugeführt werden, der die Ausgangssignale des zweiten Verstärkers (54) in Abhängigkeit von den Ausgangssignalen des ersten Verstärkers (53) begrenzt und der elektrischen Leistungsstufe (56) des Dämpferventils (10) zuführt.

**22.** Dämpferventil nach Anspruch 10,11 und 21, dadurch **gekennzeichnet,** daß der im Schwingungsdämpfer eingestellte Druck (p) im statischen Zustand die folgende Gleichung erfüllt:

$$p = \frac{K_{mag} \cdot i - C \cdot y}{A_1} = K_1 \cdot i + K_2 \cdot y,$$

wobei

$K_{mag}$ [N/A] den Übertragungsfaktor des elektromechanischen Wandlers (20),

i [A] den der Tauchspule (15) zugeführten Strom,

C [N/mm] die Federkonstante der Biegefeder (25),

y [mm] den Betätigungsweg des Ventilkörpers (14), und

$A_1$ [$mm^2$] die Fläche des am Ventilkörper (14) anliegenden zylindrischen Teiles (32)

bedeuten.

**Claims**

**1.** A vibration absorber valve (10) for controllable vibration absorbers with a pressure-unbalanced valve body (14) directly actuatable by an electromechanical transducer (20), wherein the valve body (14) is directly coupled to a measuring apparatus (30) which monitors the actuating travel of the valve body (14) and whose output signal is conveyed to an electric circuit,
**characterized** in that the electric circuit actuates the electromechanical transducer (20) in such a way that in a first range (A) of volumetric flow rate a restricting function is performed and in a second range (B) of volumetric flow rate a pressure-limiting function is performed.

**2.** A vibration absorber valve as claimed in claim 1,
**characterized** in that the electromechanical transducer (20) is configured in the shape of a plunger coil (15) which interacts with a permanent magnet (17) and whose carrier forms the valve body (14).

**3.** A vibration absorber valve as claimed in claim 1,
**characterized** in that the valve body (14) is configured in the shape of a bushing which is slidingly guided on a cylindrical guide element (11) and interacts with cross-sectional areas of flow (12) provided in the guide element (11).

**4.** A vibration absorber valve as claimed in claim 3,
**characterized** in that the valve body (14) and/or the chamber disposed downstream of the cross-sectional areas of flow (12), as seen in the flow direction, are configured such that a deviation of the volumetric flow is ensured, thereby achieving a compensation of hydraulic forces which develop in the range of effect.

**5.** A vibration absorber valve as claimed in claim 4,
**characterized** in that the control edge (36) of the valve body (14) interacting with the cross-sectional areas of flow (12) has a truncated-cone shaped configuration.

**6.** A vibration absorber valve as claimed in claim 4,
**characterized** in that the cross-sectional areas of flow (12) terminate into an annular hydraulic chamber (22) which is connected to outlet ducts (23) of the absorber valve (10) in such a manner that the static pressure developing in the annular chamber (22) renders effective a hydraulic force component which counteracts the Bernouille's forces acting on the valve body (14).

**7.** A vibration absorber valve as claimed in claim 3 or in anyone of claims 4 to 6,
**characterized** in that the guide element (11) includes radial pressure-relieving grooves (27) which terminate into a slot (26) provided between the valve body (14) and the guide element (11).

**8.** A vibration absorber valve as claimed in claim 7,
**characterized** in that the guide element (11) includes pressure agent ducts (28) which are connected to the slot (26) and which are preceded by a filter element (29).

**9.** A vibration absorber valve as claimed in any one of the preceding claims,
**characterized** in that one or a plurality of annular grooves (39) are provided in the range of the cross-sectional areas of flow (12).

**10.** A vibration absorber valve as claimed in claim 8,
**characterized** in that the guide element (11) includes a bore (31) within which a cylindrical element (32) is guided that is loosely axially abutted against the valve body (14) and the end surface of which can be acted upon by the hydraulic pressure prevailing in the vibration absorber (10).

**11.** A vibration absorber valve as claimed in claim 2,
**characterized** in that the valve body (14) is suspended on a bending spring (25) which is compressed in the absorber valve housing (35).

**12.** A vibration absorber valve as claimed in claim 11,
**characterized** in that the bending spring (25) is configured as a spring plate which includes passages (40).

**13.** A vibration absorber valve as claimed in claim 1,
**characterized** in that the measuring apparatus (30) monitors changes of magnetic variables which are caused by adjustment of the valve body (14).

**14.** A vibration absorber valve as claimed in claim 13,
**characterized** in that the measuring apparatus (30) is formed of a permanent magnet (45) fixed to the valve body (14) or to an element (44) coupled to it, and by a sensor element (46) recording its magnetic field.

**15.** A vibration absorber valve as claimed in claim 13,
**characterized** in that the measuring apparatus is a sensor element which is coupled to the valve body and interacts with the permanent magnet of the electromechanical transducer.

**16.** A vibration absorber valve as claimed in claim 14 or claim 15,
**characterized** in that the sensor element (46) is a magneto-resistive element.

**17.** A vibration absorber valve as claimed in claim 14 or claim 15,
**characterized** in that the sensor element (46) is a Hall element.

**18.** A vibration absorber valve as claimed in claim 1,
**characterized** in that the measuring apparatus is a reflecting light barrier.

**19.** A vibration absorber valve as claimed in claim 1,
**characterized** in that the measuring apparatus is configured as an arrangement working by the eddy current principle.

**20.** A vibration absorber valve as claimed in claim 12,
**characterized** in that the current supply of the plunger coil (15) is effected by the spring plate (25) or a plurality of spring plates.

**21.** A process for the adjustment of the vibration absorbing force of a controllable vibration absorber which is used in a chassis regulating system for automotive vehicles and includes an absorber valve (10) actuatable by an electrical output stage (56), in particular as claimed in anyone of claims 1 to 20, the chassis regulating system comprising a valve body (14) and a measuring apparatus (30) recording the actuating travel of the valve body (14), wherein the chassis regulating system includes sensors to determine the driving dynamics condition and an electronic chassis regulator (57), the output signals of which serve to actuate the absorber valve (10),
**characterized** in that the output signals ($Y_{soll}$) of the chassis regulator (57) are conducted, on the one hand, to a comparator circuit (52) jointly with output signals of the measuring apparatus (30) and, on the other hand, to a first amplifier (53), and a differential value is computed in the comparator circuit (52) and is transmitted to a second amplifier (54), and in that the output signals of the two amplifiers (53, 54) are conducted to a variable delimiter (55) which limits the output signals of the second amplifier (54) depending on the output signals of the first amplifier (53) and conducts them to the electrical output stage (56) of the absorber valve (10).

**22.** A vibration absorber valve as claimed in claim 10, 11 and 21,
**characterized** in that the pressure (p) adjusted within the vibration absorber fulfills, in the static condition, the following equation:

$$p = \frac{K_{mag} \cdot i - C \cdot y}{A_1} = K_1 \cdot i + K_2 \cdot y,$$

in which:

| | | |
|---|---|---|
| $K_{mag}$ | [N/A] | is the proportional control factor of the electromechanical transducer (20), |
| i | [A] | is the current being supplied to the plunger coil (15), |
| C | [N/mm] | is the spring rate of the bending spring (25), |
| y | [mm] | is the actuating travel of the valve body (14), |
| $A_1$ | [sq.mm] | is the area of the cylindrical element (32) which is abutted against the valve body (14). |

**Revendications**

**1.** Valve d'amortissement (10), pour amortisseur de vibrations réglable, comprenant un obturateur de valve (14) non équilibré en pression qui est agencé de façon à pouvoir être actionné directement au moyen d'un convertisseur électromécanique (20) et qui est couplé directement à un dispositif de mesure (30) qui capte la distance parcourue d'actionnement de l'obturateur de valve (14) et dont un signal de sortie est envoyé à un circuit électrique, caractérisé en ce que le circuit électrique commande le convertisseur électromécanique (20) d'une façon telle que, dans un premier intervalle de valeurs de débit volumique (A), c'est une fonction d'étranglement qui est remplie et, dans un second intervalle de valeurs de débit volumique (B), c'est une fonction de limitation de pression.

**2.** Valve d'amortisseur selon la revendication 1, caractérisée en ce que le convertisseur électromécanique (20) est réalisé sous forme d'une bobine mobile (15) qui coopère avec un aimant permanent (17) et dont le support constitue l'obturateur de valve (14).

**3.** Valve d'amortiseur selon la revendication 1, caractérisée en ce que l'obturateur de valve (14) est réalisé sous forme d'un manchon qui est guidé d'une manière coulissante sur une partie cylindrique de guidage (11) et coopère avec des sections de passage (12) prévues dans la partie de guidage (11).

**4.** Valve d'amortisseur selon la revendication 3, caractérisée en ce que l'obturateur de valve (14) et/ou l'espace qui se trouve situé en aval des sections de passage (12) suivant la direction d'écoulement sont agencés d'une façon telle qu'une déviation du flux volumique est assurée, de sorte qu'il se produit une compensation des forces hydrauliques se présentant dans la zone d'action.

**5.** Valve d'amplificateur selon la revendication 4, caractérisée en ce que le bord de commande (36) de l'obturateur de valve (14) qui coopère avec les sections de passage (12) a une forme tronconique.

**6.** Valve d'amortisseur selon la revendication 4, caractérisée en ce que les sections de passage (12) débouchent dans un espace hydraulique annulaire (22) qui communique avec des conduits de sortie (23) de la valve d'amortisseur (10) d'une façon telle que la pression statique régnant dans l'espace annulaire (22) permet que s'exerce une composante de force hydraulique qui s'oppose aux forces de Bernoulli agissant sur l'obturateur de valve (14).

7. Valve d'amortisseur selon la revendication 3 ou l'une des revendications 4 à 6, caractérisée en ce qu'il est prévu, dans la partie de guidage (11), des gorges radiales (27) de détente par diminution de pression qui débouchent dans un espace (26) réalisé entre l'obturateur de valve (14) et la pièce de guidage (11). La mesure ainsi adoptée permet d'empêcher l'action du serrage hydraulique dans cette zone.

8. Valve d'amortisseur selon la revendication 7, caractérisée en ce que la pièce de guidage (11) comporte des conduits d'agent de pression (28) qui communiquent avec l'espace (26) et en amont desquels un élément de filtre (29) est disposé.

9. Valve d'amortisseur selon l'une des revendications précédentes, caractérisée en ce qu'une ou plusieurs gorges annulaires (39) sont prévues dans la zone des sections de passage (12).

10. Valve d'amortisseur selon la revendication 8, caractérisée en ce que la pièce de guidage (11) comporte un passage (31) dans lequel est guidée une pièce cylindrique (32) qui est solidaire de l'obturateur de valve (14) d'une manière amovible suivant la direction axiale et dont la surface frontale est agencée de façon à pouvoir être soumise à l'action de la pression hydraulique régnant dans l'amortisseur de vibrations (10).

11. Valve d'amortisseur selon la revendication 2, caractérisée en ce que l'obturateur de valve (14) est suspendu à un ressort de flexion (25) qui est monté d'une manière serrée dans le boîtier de valve d'amortisseur (35).

12. Valve d'amortisseur selon la revendication 11, caractérisée en ce que le ressort de flexion (25) est réalisé sous forme d'un anneau élastique pourvu de passages (40).

13. Valve d'amortisseur selon la revendication 1, caractérisée en ce que le dispositif de mesure (30) capte des variations de grandeurs magnétiques qui sont provoquées par le déplacement en translation de l'obturateur de valve (14).

14. Valve d'amortisseur selon la revendication 13, caractérisée en ce que le dispositif de mesure (30) est formé d'un aimant permanent (45) monté sur l'obturateur de valve (14) ou une pièce (44) solidaire de ce dernier, ainsi que d'un élément de capteur (46) qui enregistre son champ magnétique.

15. Valve d'amortisseur selon la revendication 13, caractérisée en ce que le dispositif de mesure est constitué d'un élément de capteur qui est fixé sur l'obturateur de valve et coopère avec l'aimant permanent du convertisseur électromécanique.

16. Valve d'amortisseur selon la revendication 14 ou 15, caractérisée en ce que l'élément de capteur (46) est constitué d'un élément magnétorésistif.

17. Valve d'amortisseur selon la revendication 14 ou 15, caractérisée en ce que l'élément de capteur (46) est constitué d'un élément Hall.

18. Valve d'amortisseur selon la revendication 1, caractérisée en ce que le dispositif de mesure est constitué d'un barrage photoélectrique à réflexion.

19. Valve d'amortisseur selon la revendication 1, caractérisée en ce que le dispositif de mesure est réalisé sous forme d'un agencement fonctionnant suivant le principe des courants de Foucault.

20. Valve d'amortisseur selon la revendication 12, caractérisée en ce que l'alimentation en courant de la bobine mobile (15) s'effectue par l'intermédiaire de l'anneau élastique (25) ou de plusieurs anneaux élastiques.

21. Procédé de réglage de la force d'amortissement d'un amortisseur de vibrations réglable, utilisé dans un système de régulation d'assiette pour véhicule automobile, qui comprend une valve d'amortisseur (10), conforme notamment à l'une des revendications 1 à 20, qui est agencée de façon à pouvoir être commandée au moyen d'un étage électrique de puissance (56) et comprend un obturateur de valve (14) et un dispositif de mesure (30) qui capte la distance parcourue d'actionnement de l'obturateur de valve (14), tandis que le système de régulation d'assiette est pourvu de capteurs, servant à déterminer l'état dynamique de conduite, et d'un régulateur électronique d'assiette (57) dont des signaux de sortie servent à commander la valve d'amortisseur (10), caractérisé en ce que les signaux de sortie (Yconsigne) du régulateur d'assiette (57) sont envoyés, d'une part, en même temps que des signaux de sortie du dispositif de mesure (30) captant la distance parcourue d'actionnement de l'obturateur de valve, à un circuit de comparaison (52) et, d'autre part, à un premier amplificateur (53), une valeur de différence étant formée dans le circuit de comparaison (52) et envoyée à un second amplificateur (54), et en ce que les signaux de sortie des deux amplificateurs (53, 54) sont envoyés à un élément de transfert avec limitation (55), de type variable, qui limite les signaux de sortie du second amplificateur (54) en fonction des signaux de sortie du premier amplificateur (53) et les envoie à l'étage électrique de puissance (56) de la valve d'amortisseur (10).

**22.** Valve d'amortisseur selon la revendication 10, 11 et 21, caractérisée en ce que la pression (p) à l'état statique qui est réglée dans l'amortisseur de vibrations répond à la relation suivante,

$$p = (K_{mag} \cdot i - C \cdot y) / A_1 = K_1 \cdot i + K_2 \cdot y$$

dans laquelle

$K_{mag}$ [N/A] désigne le facteur de conversion du convertisseur électromécanique (20),
$i$ [A] le courant appliqué à la bobine mobile (15),
$C$ [N/mm] la constante élastique du ressort de flexion (25),
$y$ [mm] la distance parcourue d'actionnement de l'obturateur de valve (14), et
$A_1$ [$mm^2$] la surface de la pièce cylindrique (32) solidaire de l'obturateur de valve (14).

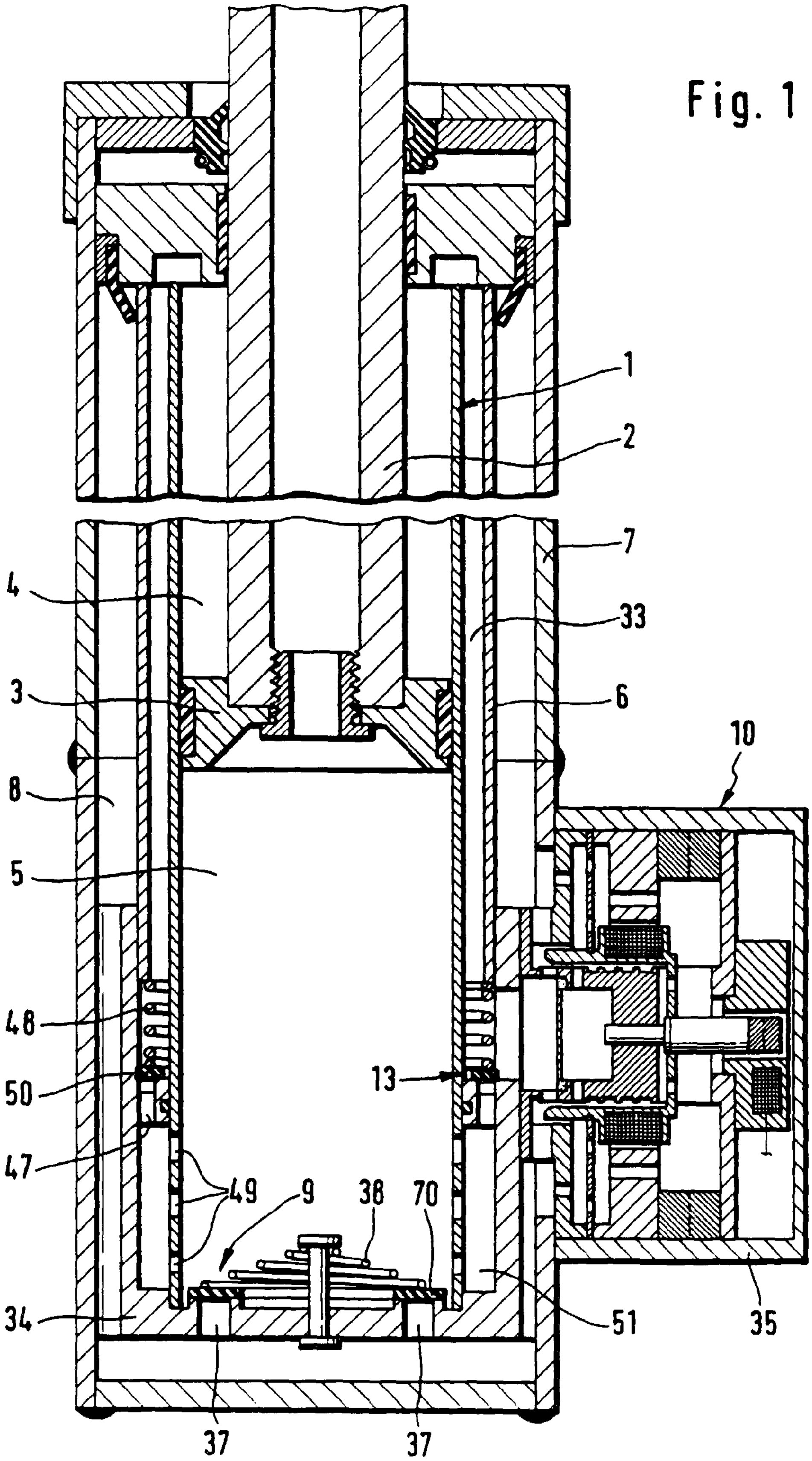


Fig. 1

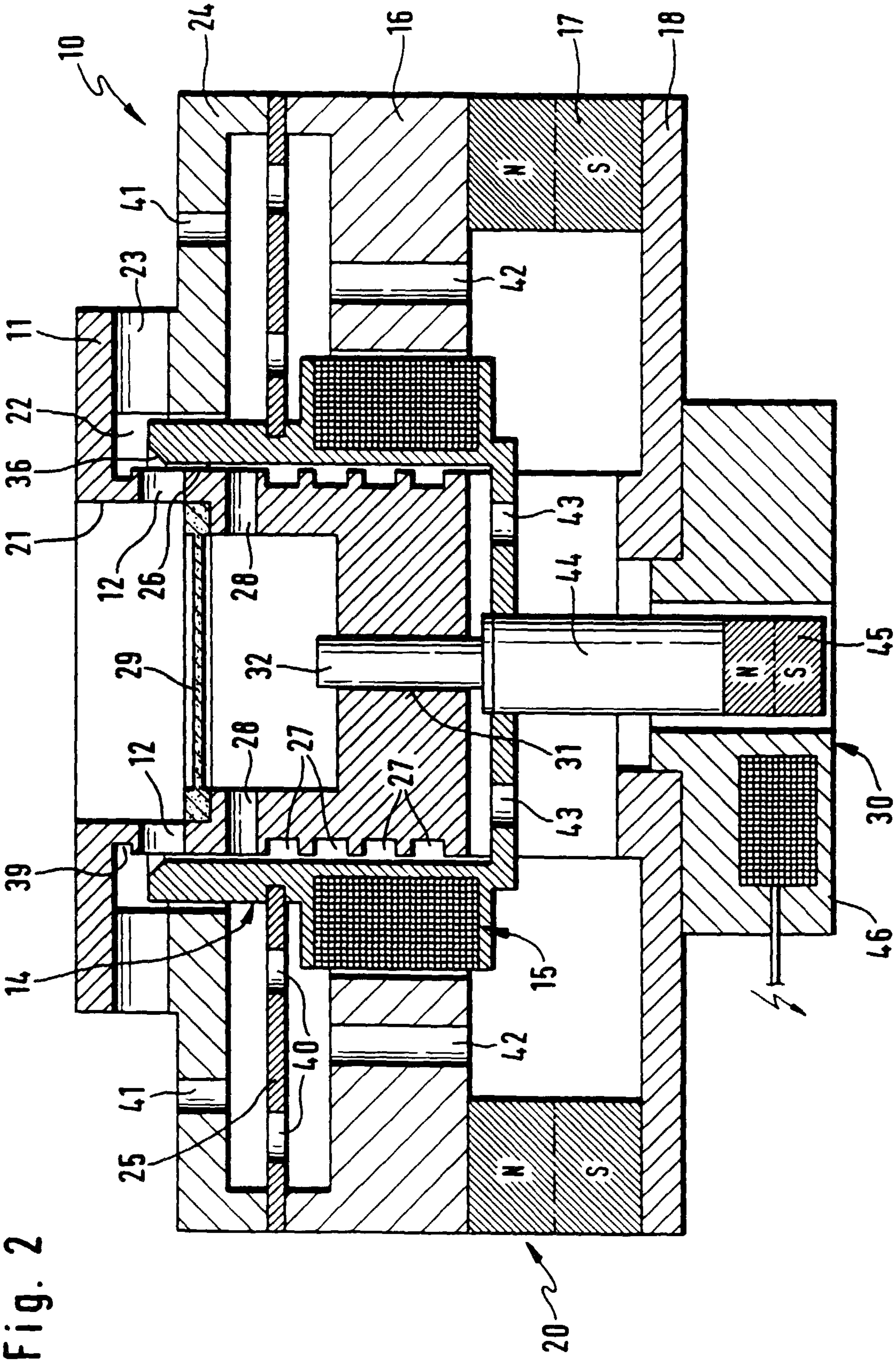
10
24
16
17
18
41
23
11
22
36
21
12
26
28
29
32
44
45
43
42
N
S
31
28
27
12
39
14
15
30
46
40
25
20

Fig. 2

Fig. 4

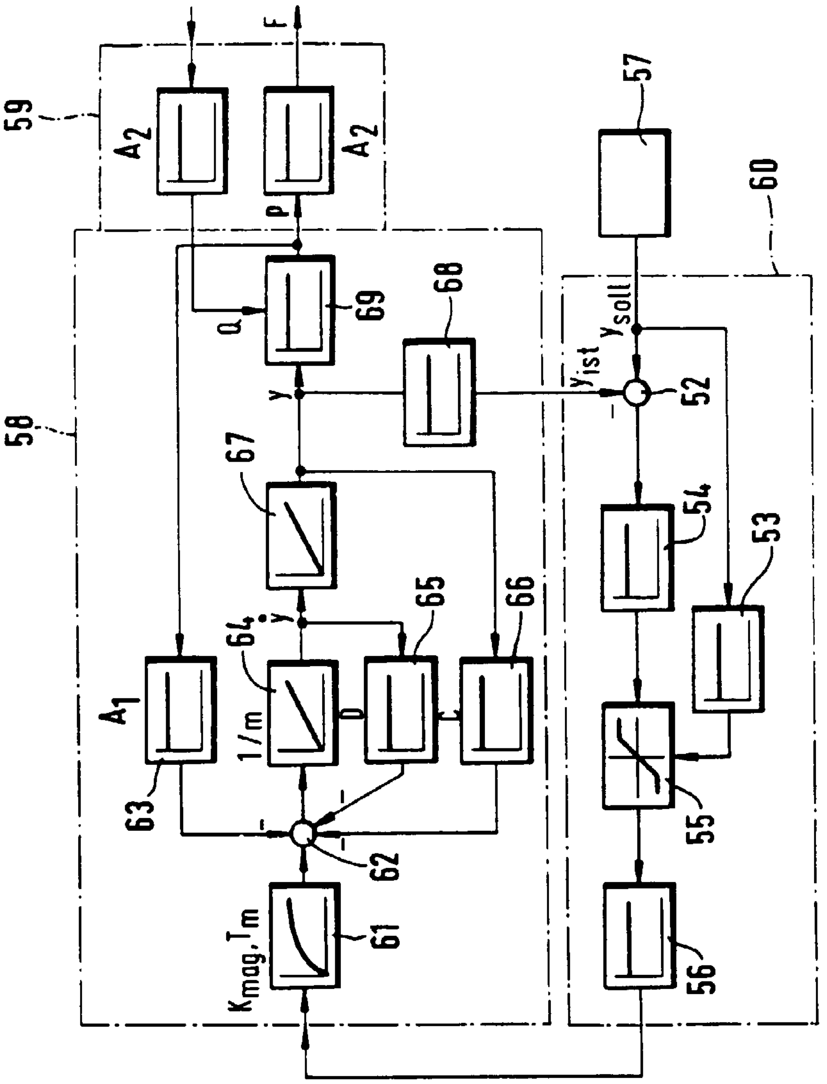
58
59
60
A2
A2
F
p
Q
69
68
y
67
ẏ
64
65
66
A1
1/m
63
62
61
Kmag, Tm
57
ysoll
yist
52
54
53
55
56

Fig. 3

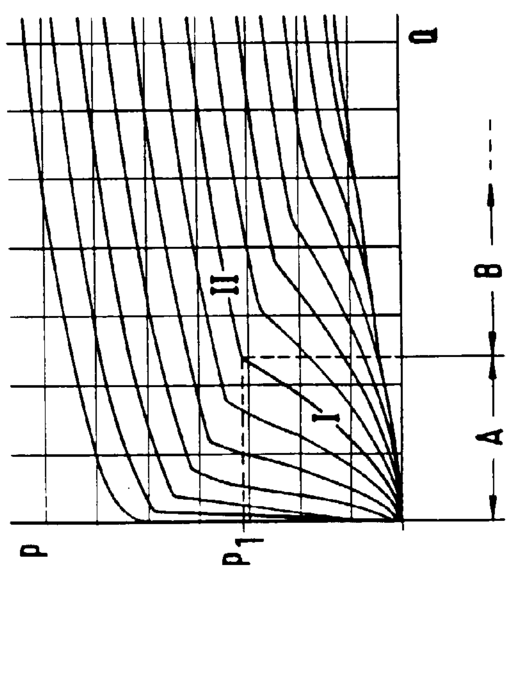
p
p1
Q
I
II
A
B